Europäisches Patentamt

(19) European Patent Office

Office européen des brevets

(11) Publication number: **0 252 991 B1**

# EUROPEAN PATENT SPECIFICATION

(45) Date of publication of patent specification:
24.04.91 Bulletin 91/17

(51) Int. Cl.⁵: **C09K 11/61,** C09K 11/62, C09K 11/64, C09K 11/65, C09K 11/85, C09K 11/86

(21) Application number: 87900683.1

(22) Date of filing: 05.01.87

(86) International application number:
PCT/JP87/00003

(87) International publication number:
WO 87/04177 16.07.87 Gazette 87/15

(54) ALKALI HALIDE PHOSPHOR.

(30) Priority: 28.12.85 JP 297516/85

(43) Date of publication of application:
20.01.88 Bulletin 88/03

(45) Publication of the grant of the patent:
24.04.91 Bulletin 91/17

(84) Designated Contracting States:
DE GB NL

(56) References cited:
EP-A- 0 174 875
NL-A- 8 302 533

(73) Proprietor: KONICA CORPORATION
26-2, Nishi-shinjuku 1-chome Shinjuku-ku
Tokyo (JP)

(72) Inventor: AMITANI, Koji
Konishiroku Photo Industry Co., Ltd.
1, Sakuramachi, Hino-shi Tokyo 191 (JP)
Inventor: NAKAMARU, Naoko
Konishiroku Photo Industry Co., Ltd.
1, Sakuramachi, Hino-shi Tokyo 191 (JP)
Inventor: SHIMADA, Fumio
Konishiroku Photo Industry Co., Ltd.
1, Sakuramachi, Hino-shi Tokyo 191 (JP)

(74) Representative: Türk, Gille, Hrabal
Brucknerstrasse 20
W-4000 Düsseldorf 13 (DE)

## Description

This invention relates to a phosphor, more particularly to an alkali halide stimulable phosphor.

In the prior art, for obtaining a radiation image, the so called radiation photographic method by use of a silver salt has been utilized, but it has become desired to have a method for converting the radiation image into an image without use of a silver salt.

As a method substituting for the above radiation photographic method, there has been proposed the method in which the radiation transmitted through a subject is absorbed onto a phosphor, then the phosphor is excited with a certain kind of energy to radiate the radiation energy accumulated in the phosphor as luminescence, which luminescence is detected to form an image. As a specific method, there has been known a radiation image converting method wherein a panel having a stimulable phosphor layer formed on a support is used and one or both of visible ray and infrared ray is used as the excitation energy (U.S. Patent No. 3,859,527).

The performances demanded for the stimulable phosphor to be used in the above radiation image converting method may include high intensity of stimulated luminescence so that the dose exposed may be smaller, rapid response speed of stimulated luminescence to the stimulating ray so that high speed reading may be possible, easiness in cancellation of remained images, and stimulation spectrum adaped to the oscillation wavelength of semiconductor laser (750 nm or longer) which can make the reading device small scale and low cost.

As a radiation image converting method by use of the stimulable phosphor satisfying these requisite performances, there is the radiation image converting method by use of an alkali halide phosphor as disclosed in Japanese Unexamined Patent Publication No. 72088/1986, etc.

In the above radiation image converting method, the operation to obtain a radiation image of a subject is performed by absorbing the radiation energy transmitted through the subject or emitted from the subject onto the stimulable phosphor constituting the radiographic image storage panel, scanning the radiographic image storage panel containing said stimulable phosphor with a laser beam to release the radiation energy accumulated as luminescence in time series, and detecting the luminescence.

Whereas, in a phosphor, there is generally observed luminescence emitted continuously even after stopping excitation, namely a phenomenon of afterglow, and such afterglow of stimulated luminescence is also seen similarly in the stimulable phosphor to be used for the radiographic image storage panel. While the stimulated luminescence to be detected is emitted from the picture element irradiated with the stimulating ray at a certain time point, afterglow of stimulated luminescence is emitted from all the picture elements scanned with the stimulating ray before said time point, and a part thereof is detected mixed with the stimulated luminescence to be detected, whereby the image obtained by the radiographic image storage panel containing such phosphor will be lowered in image quality.

The above trouble of afterglow of stimulated luminescence is improved in the alkali halide phosphor disclosed in Japanese Unexamined Patent Publications No. 73786/1986 and 73787/1986, but it cannot be said to be satisfactory yet, and it would be desirable to further improve the afterglow of stimulated luminescence characteristic of the alkali halide phosphor.

[Disclosure of the invention]

The present invention has been accomplished on the basis of such a demand, and its object is to provide an alkali halide phosphor improved in afterglow characteristic of stimulated luminescence.

The present inventors have studied variously about the alkali halide phosphor improved in afterglow characteristic of stimulated luminescence along the object of the present invention as mentioned above, and consequently accomplished the above invention by an alkali halide phosphor characterized by containing oxygen.

As an embodiment of the present invention, the above oxygen should preferably contained as an oxygen compound. Also, the above oxygen should be contained in an amount of oxygen atoms and/or oxygen ions of 0.5 mol or less, more preferably $10^{-6}$ mol to 0.2 mol, per 1 mol of the alkali halide in the alkali halide phosphor.

Also, it is preferable that Rb and/or Cs should be contained as the component in the alkali halide of said phosphor.

Further, as the activator, at least one selected from the respective compounds of Tl, Na, Ag, Cu and In should be preferably contained.

The alkali halide phosphor containing oxygen of the present invention as mentioned above can be obtained by, for example, carrying out calcination by use of compounds containing oxygen such as hydroxides, carbonates, sulfates, nitrates, oxides, etc., as a part of the phosphor starting material. More specifically, there may be employed, for example, the method in which an alkali metal compound containing oxygen such as KOH,

2

EP 0 252 991 B1

$Na_2CO_3$, $Rb_3SO_4$, $CsNO_3$, $Rb_2O$, $RbNO_3$, etc., is added, or the method in which an activator is given in the form of a nitrate or an oxide such as $TlNO_3$, $Tl_2O$, etc. This method is preferably employed, because it exhibits remarkable reduction in afterglow quantity of stimulated luminescence as compared with the method mentioned below.

Alternatively, the alkali halide phosphor of the present invention containing oxygen can be also obtained by carrying out calcination in an oxidative atmosphere when calcining an alkali halide phosphor from the phosphor starting materials.

When the alkali halide phosphor containing oxygen according to the present invention is irradiated with radiation such as X-ray, UV-ray, electron beam, etc., and then the above phosphor is subjected to stimulation by irradiation of one of visible light and infrared ray or both thereof so that the intensity may be changed to a rectangular shape, afterglow of stimulated luminescence is clearly smaller as compared with the case when similar operation is conducted by use of an alkali halide phosphor known in the art.

The stimulable phosphor of the present invention is described below by referring to the alkali halide phosphor shown by the following formula (I) as an Example.

Formula (I)

$$M^IX \cdot aM^{II}X'_2 \cdot bM^{III}X''_3 \cdot cA : dB$$

In the above formula, $M^I$ is at least one alkali metal selected from Li, Na, K, Rb and Cs.

$M^{II}$ is at least one divalent metal selected from Be, Mg, Ca, Sr, Ba, Zn, Cd, Cu and Ni. $M^{III}$ is at least one trivalent metal selected from Sc, Y, La, Ce, Pr, Nd, Pm, Sm, Eu, Gd, Tb, Dy, Ho, Er, Tm, Yb, Lu, Al, Ga and In.

X, X′ and X″ each represent at least one halogen selected from F, Cl, Br and I.

A is a compound having a composition containing oxygen, preferably at least one compound made from above $M^I$, $M^{II}$ and $M^{III}$, and further the activator B as described below.

B is at least one metal compound of the metal selected from Eu, Tb, Ce, Tm, Dy, Pr, Ho, Nd, Yb, Er, Gd, Lu, Sm, Y, Tl, Na, Ag, Cu, In and Mg or said metal, preferably a metal compound.

On the other hand, $\underline{a}$ is a numerical value in the range of $0 \leq \underline{a} < 0.5$, $\underline{b}$ is a numerical value in the range of $0 \leq \underline{b} < 0.5$, and $\underline{c}$ is a numerical value which is determined so that the content of oxygen atoms or oxygen ions contained in A is 0.5 mol or less, preferably $10^{-6}$ mol to 0.2 mol per 1 mol of the alkali halide in the alkali halide phosphor. $\underline{d}$ is a numerical value in the range of $0 < \underline{d} \leq 0.2$. However, when the above A is an oxygen compound of the activator of the above B, $\underline{d}$ may be equal to 0.

In the case when oxygen is incorporated by calcining the alkali halide stimulable phosphor of the present invention in an oxidative atmosphere, the composition formula of said alkali halide stimulable phosphor is not limited to the above formula (I).

For preparation of the above alkali halide stimulable phosphor, first as the stimulable phosphor starting materials, there may be employed :

I) at least one of LiF, LiCl, LiBr, LiI, NaF, NaCl, NaBr, NaI, KF, KCl, KBr, KI, RbF, RbCl, RbBr, RbI, CsF, CsCl, CsBr and CsI,

II) at least one of $BeF_2$, $BeCl_2$, $BeBr_2$, $BeI_2$, $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaBr_2 \cdot 2H_2O$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, $CuI_2$, $NiF_2$, $NiCl_2$, $NiBr_2$, and $NiI_2$,

III) at least one $ScF_3$, $ScCl_3$, $ScBr_3$, $ScI_3$, $YF_3$, $YCl_3$, $YBr_3$, $YI_3$, $LaF_3$, $LaCl_3$, $LaBr_3$, $LaI_3$, $CeF_3$, $CeCl_3$, $CeBr_3$, $CeI_3$, $PrF_3$, $PrCl_3$, $PrBr_3$, $PrI_3$, $NdF_3$, $NdCl_3$, $NdBr_3$, $NdI_3$, $PmF_3$, $PmCl_3$, $PmBr_3$, $PmI_3$, $SmF_3$, $SmCl_3$, $SmBr_3$, $SmI_3$, $EuF_3$, $EuCl_3$, $EuBr_3$, $EuI_3$, $GdF_3$, $GdCl_3$, $GdBr_3$, $GdI_3$, $TbF_3$, $TbCl_3$, $TbBr_3$, $TbI_3$, $DyF_3$, $DyCl_3$, $DyBr_3$, $DyI_3$, $HoF_3$, $HoCl_3$, $HoBr_3$, $HoI_3$, $ErF_3$, $ErCl_3$, $ErBr_3$, $ErI_3$, $TmF_3$, $TmCl_3$, $TmBr_3$, $TmI_3$, $YbF_3$, $YbCl_3$, $YbBr_3$, $YbI_3$, $LuF_3$, $LuCl_3$, $LuBr_3$, $LuI_3$, $AlF_3$, $AlCl_3$, $AlBr_3$, $AlI_3$, $GaF_3$, $GaCl_3$, $GaBr_3$, $GaI_3$, $InF_3$, $InCl_3$, $InBr_3$ and $InI_3$,

IV) at least one of compounds containing oxygen, and

V) at least one of activator starting materials of Eu compounds group, Tb compounds group, Ce compounds group, Tm compounds group, Dy compounds group, Pr compounds group, Ho compounds group, Nd compounds group, Yb compounds group, Er compounds group, Gd compounds group, Lu compounds group, Sm compounds group, Y compounds group, Tl compounds group, Na compounds group, Ag compounds group, Cu compounds group, In compounds group, Mg compounds group.

In $M^IX$ $aM^{II}X'_2$ $bM^{III}X''_3$ $cA : dB$ represented stoichiometrically by the formula (I), $\underline{a}$ is a numerical value in the range of $0 \leq \underline{a} < 0.5$, preferably $0 \leq \underline{a} < 0.4$, $\underline{b}$ is a numerical value in the range of $0 \leq \underline{b} < 0.5$, preferably $0 \leq \underline{b} < 10^{-2}$.

Further, $\underline{c}$ is a numerical value determined so that the content of oxygen atoms and/or oxygen ions contained in A may be 0.5 mol or less, preferably from $10^{-6}$ mol to 0.2 mol per 1 mol of the alkali halide in the alkali halide phosphor.

3

d is a numerical value in the range of $0 < \underline{d} \leq 0.2$, preferably $10^{-6} \leq \underline{d} \leq 0.1$. However, when the above A is an oxygen compound of the activator of the above B, $\underline{d}$ may be equal to 0.

The above stimulable phosphor starting materials of I)-V) are weighed so that the mixture may have the mixed composition as described above, and thoroughly mixed by use of a mortar, a ball mill, a mixer mill, etc.

Next, the stimulable phosphor starting material mixture obtained is filled in a heat-resisting vessel such as the quartz crucible or alumina crucible, etc., and calcination is conducted in an electric furnace. The calcination temperature may suitably be 500 to 1000°C. The calcination time, which may differ depending on the filled amount of the starting material mixture, the calcination temperature, etc., may be generally suitably 0.5 to 10 hours.

The calcination atmosphere may be preferably neutral atmosphere such as nitrogen gas atmosphere, argon gas atmosphere, etc., or oxidative atmosphere containing oxygen gas. If the mixture is once calcined under the above calcination conditions, the calcined product is then taken out from the electric furnace for pulverization, and then the calcined product powder is again filled in a heat-resisting vessel and placed in electric furnace to carry out re-calcination under the same calcination conditions as described above, the stimulated luminescence afterglow of the stimulable phosphor obtained can be made further smaller and the intensity of stimulated luminescence can be enhanced. Also, during cooling of the calcined product from the calcination temperature to room temperature, if the calcined product is cooled quickly in neutral atmosphere or oxidative atmosphere by moving it from the heating section to the cooling section in the electric furnace, the stimulated luminescence afterglow of the phosphor obtained can be made further smaller and the intensity of stimulated luminescence can be enhanced.

After calcination, the phosphor obtained is pulverized and thereafter treated according to various operations generally employed in preparation of phosphor such as washing, drying, screening with sieve, etc., to give the stimulable phosphor of the present invention characterized by containing oxygen.

The alkali halide phosphor of the present invention characterized by containing oxygen thus obtained is clearly smaller in afterglow of stimulated luminescence as compared with the alkali halide phosphor containing no oxygen known in the prior art.

In the alkali halide phosphor, afterglow tends to be reduced as the amount of oxygen contained therein is larger, but if the content of oxygen is too much, the intensity of stimulated luminescence will be lowered and therefore the radiographic sensitivity will be lowered undesirably when used for radiographic image storage panel. Accordingly, the optimum content of oxygen is selected practically depending on the combination of intensity of stimulated luminescence and afterglow characteristic of stimulated luminescence. For reducing afterglow of stimulated luminescence without substantial lowering in intensity of stimulated luminescence, the content as oxygen atoms and/or oxygen ions per 1 mol of the alkali halide may be preferably 0.5 mol or less, more preferably $10^{-6}$ mol to 0.2 mol.

When the above alkali halide contains Rb and/or Cs as the component, afterglow of stimulated luminescence is reduced remarkably by containing oxygen. Also, when at least one selected from the compounds of Tl, Na, Ag, Cu and In is used as the activator, afterglow of stimulated luminescence will be remarkably reduced by containing oxygen.

Also, in the case of obtaining a stimulable phosphor according to the gas phase deposition method such as the vapor deposition method or the sputtering method, the alkali halide phosphor characterized by containing oxygen is smaller in afterglow of stimulated luminescence as compared with the alkali halide phosphor containing no oxygen known in the prior art. The content of oxygen atoms and/or oxygen ions may be preferably 0.5 mol or less, more preferably $10^{-6}$ mol to 0.2 mol, per 1 mol of the alkali halide. Reduction in afterglow of stimulated luminescence by incorporation of oxygen is particularly marked, when Rb and/or Cs is contained as the component in the alkali halide, or at least one selected from the compounds of Tl, Na, Ag, Cu and In is used as the activator.

Further, the alkali halide phosphor characterized by containing oxygen of the present invention is not only reduced in afterglow of stimulated luminescence, but also the afterglow of emission when excited with a radiation or UV-ray, etc., (momentary emission) will be also reduced corresponding to the extent of reduction in afterglow of stimulated luminescence. When a radiographic image storage panel containing the alkali halide phosphor characterized by containing oxygen of the present invention is used in the method of obtaining a radiographic image transmitted through a subject or emitted from the subject by use of a radiographic image storage panel containing stimulable phosphor, due to its small amount of afterglow of the momentary emission, it is also possible to shorten the time between emission of the radiation and initiation of excitation with a laser of visible ray or infrared ray, for example, about 1 sec. to 10 sec., whereby it becomes possible to enhance the running efficiency as the system.

The present invention is described below by referring to the following Examples and Comparative examples.

[Brief description of the drawings]

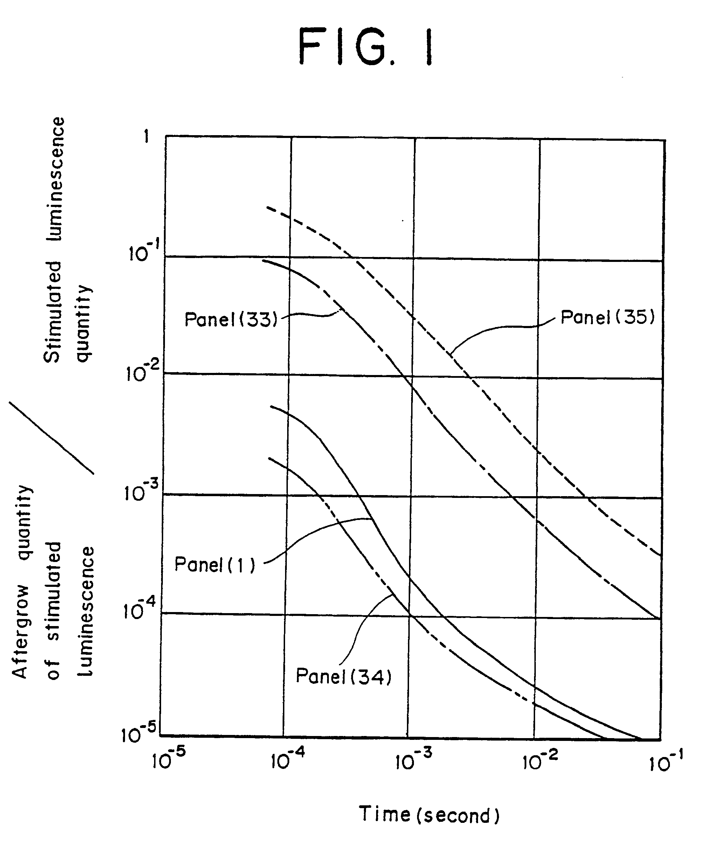

Fig. 1 is a graph showing the stimulated luminescence afterglow characteristic of the radiographic image storage panel (1) comprising the RbBr · 0.03RbOH : 0.001TlBr of the present invention (solid line), the radiographic image storage panel (33) comprising the RbBr :0.001TlBr of the present invention (chain line), the radiographic image storage panel (34) comprising RbBr · 0.03RbOH :0.0004TlNO$_3$ of the present invention (chain double-dashed line) and the radiographic image storage panel (35) comprising the RbBr :0.001TlBr phosphor for comparative purpose (dotted line).

[Best modes for practicing the invention]

Example 1

The respective stimulable phosphor starting materials were weighed as shown below by (1) to (32), and then thoroughly mixed by use of a ball mill to compound 32 kinds of stimulable phosphor starting material mixtures.

| | | | |
|---|---|---|---|
| (1) | RbBr | 165.4 g | (1 mol) |
| | RbOH | 3.07 g | (0.03 mol) |
| | TlBr | 0.284 g | (0.001 mol) |
| (2) | RbBr | 165.4 g | (1 mol) |
| | NaOH | 2.00 g | (0.05 mol) |
| | TlBr | 0.284 g | (0.001 mol) |
| (3) | RbBr | 165.4 g | (1 mol) |
| | Na$_2$CO$_3$ | 3.18 g | (0.03 mol) |
| | TlBr | 0.284 g | (0.001 mol) |
| (4) | RbBr | 165.4 g | (1 mol) |
| | KOH | 2.81 g | (0.05 mol) |
| | TlBr | 0.284 g | (0.001 mol) |
| (5) | RbBr | 165.4 g | (1 mol) |
| | Rb$_2$O | 3.74 g | (0.02 mol) |
| | TlBr | 0.284 g | (0.001 mol) |
| (6) | RbBr | 165.4 g | (1 mol) |
| | Rb$_2$CO$_3$ | 4.62 g | (0.02 mol) |
| | TlBr | 0.284 g | (0.001 mol) |
| (7) | RbBr | 1,654 g | (10 mol) |
| | RbNO$_3$ | 0.0044 g | ($3 \times 10^{-6}$ mol) |

|      |          |          |                          |
|------|----------|----------|--------------------------|
|      | TlBr     | 2.84 g   | (0.01 mol)               |
| (8)  | RbBr     | 1,654 g  | (10 mol)                 |
|      | $RbNO_3$ | 0.0059 g | ($4 \times 10^{-6}$ mol) |
|      | TlBr     | 2.84 g   | (0.01 mol)               |
| (9)  | RbBr     | 1,654 g  | (10 mol)                 |
|      | $RbNO_3$ | 0.0147 g | ($1 \times 10^{-5}$ mol) |
|      | TlBr     | 2.84 g   | (0.01 mol)               |
| (10) | RbBr     | 165.4 g  | (1 mol)                  |
|      | $RbNO_3$ | 0.0147 g | ($1 \times 10^{-5}$ mol) |
|      | TlBr     | 0.284 g  | (0.001 mol)              |
| (11) | RbBr     | 165.4 g  | (1 mol)                  |
|      | $RbNO_3$ | 2.95 g   | (0.02 mol)               |
|      | TlBr     | 0.284 g  | (0.001 mol)              |
| (12) | RbBr     | 165.4 g  | (1 mol)                  |
|      | $RbNO_3$ | 5.90 g   | (0.04 mol)               |
|      | TlBr     | 0.284 g  | (0.001 mol)              |
| (13) | RbBr     | 165.4 g  | (1 mol)                  |
|      | $RbNO_3$ | 8.85 g   | (0.06 mol)               |
|      | TlBr     | 0.284 g  | (0.001 mol)              |
| (14) | RbBr     | 165.4 g  | (1 mol)                  |
|      | $RbNO_3$ | 10.32 g  | (0.07 mol)               |
|      | TlBr     | 0.284 g  | (0.001 mol)              |
| (15) | RbBr     | 165.4 g  | (1 mol)                  |
|      | $RbNO_3$ | 22.12 g  | (0.15 mol)               |
|      | TlBr     | 0.284 g  | (0.001 mol)              |
| (16) | RbBr     | 165.4 g  | (1 mol)                  |
|      | $RbNO_3$ | 29.49 g  | (0.2 mol)                |
|      | TlBr     | 0.284 g  | (0.001 mol)              |
| (17) | RbBr     | 165.4 g  | (1 mol)                  |
|      | $RbNO_3$ | 44.24 g  | (0.3 mol)                |
|      | TlBr     | 0.284 g  | (0.001 mol)              |
| (18) | RbBr     | 165.4 g  | (1 mol)                  |
|      | $Rb_2SO_4$ | 5.34 g | (0.02 mol)               |
|      | TlBr     | 0.284 g  | (0.001 mol)              |
| (19) | RbBr     | 165.4 g  | (1 mol)                  |
|      | CsOH     | 3.00 g   | (0.02 mol)               |

|        |                    |          |              |
|--------|--------------------|----------|--------------|
|        | $TlBr$             | 0.284 g  | (0.001 mol)  |
| (20)   | $RbBr$             | 165.4 g  | (1 mol)      |
|        | $Cs_2CO_3$         | 3.26 g   | (0.01 mol)   |
|        | $TlBr$             | 0.284 g  | (0.001 mol)  |
| (21)   | $RbBr$             | 165.4 g  | (1 mol)      |
|        | $TlNO_3$           | 0.107 g  | (0.0004 mol) |
| (22)   | $RbBr$             | 165.4 g  | (1 mol)      |
|        | $RbOH$             | 3.07 g   | (0.03 mol)   |
|        | $TlNO_3$           | 0.107 g  | (0.0004 mol) |
| (23)   | $RbBr$             | 165.4 g  | (1 mol)      |
|        | $Tl_2O$            | 0.204 g  | (0.0005 mol) |
| (24)   | $RbBr$             | 165.4 g  | (1 mol)      |
|        | $Rb_2CO_3$         | 4.62 g   | (0.02 mol)   |
|        | $Tl_2O$            | 0.204 g  | (0.0005 mol) |
| (25)   | $RbBr$             | 165.4 g  | (1 mol)      |
|        | $SrCO_3$           | 2.95 g   | (0.02 mol)   |
|        | $TlBr$             | 0.284 g  | (0.001 mol)  |
| (26)   | $RbBr$             | 165.4 g  | (1 mol)      |
|        | $BaCO_3$           | 3.95 g   | (0.02 mol)   |
|        | $TlBr$             | 0.284 g  | (0.001 mol)  |
| (27)   | $RbI$              | 212.4 g  | (1 mol)      |
|        | $TlNO_3$           | 0.107 g  | (0.0004 mol) |
| (28)   | $KI$               | 166.01 g | (1 mol)      |
|        | $RbOH$             | 3.07 g   | (0.03 mol)   |
|        | $TlI$              | 0.331 g  | (0.001 mol)  |
| (29)   | $CsBr$             | 212.8 g  | (1 mol)      |
|        | $CsOH$             | 4.50 g   | (0.03 mol)   |
|        | $TlBr$             | 0.284 g  | (0.001 mol)  |
| (30)   | $CsI$              | 259.8 g  | (1 mol)      |
|        | $TlNO_3$           | 0.107 g  | (0.0004 mol) |
| (31)   | $RbBr$             | 140.6 g  | (0.85 mol)   |
|        | $CsBr$             | 31.92 g  | (0.15 mol)   |
|        | $RbNO_3$           | 2.95 g   | (0.02 mol)   |
|        | $TlBr$             | 0.284 g  | (0.001 mol)  |
| (32)   | $RbBr$             | 140.6 g  | (0.85 mol)   |
|        | $CsBr$             | 31.92 g  | (0.15 mol)   |
|        | $TlNO_3$           | 0.107 g  | (0.0004 mol) |

Next, each of the above 32 kinds of stimulable phosphor starting material mixtures was filled in a quartz boat and placed in an electric furnace to carry out calcination.

Calcination was conducted in an inert atmosphere by flowing nitrogen gas at a flow rate of 300 cc/min. at 620°C for 5 hours, and thereafter the calcined product was left to cool to room temperature.

The calcined product was pulverized by use of a ball mill, then subjected to screening through a sieve of 150 mesh to make the particle sizes uniform to obtain respective stimulable phosphors.

Next, by use of the above 32 kinds of stimulable phosphors, radiographic image storage panels were prepared. Each radiographic image storage panel was prepared as described below.

First, 13 parts by weight of the stimulable phosphor were dispersed in 1 part by weight of a polyvinyl butyral (binder) by use a solvent mixture of butyl acetate and butanol at a weight ratio of 3 : 1, and the dispersion was applied uniformly on a polyethylene terephthalate film (support) placed horizontally by use of a wire bar, followed by natural drying to prepare a radiographic image storage panel with a film thickness of about 300 μm.

The above radiographic image storage panels prepared by use of the phosphors obtained by calcination of the phosphor starting materials of the above (1) to (32) are called panels (1) to (32), respectively.

Example 2

The respective phosphor starting materials were weighed as shown below by (32), and then thoroughly mixed by use of a ball mill to compound a stimulable phosphor starting material mixture.

(33) RbBr 165.4 g (1 mol)
TlBr 0.284 g (0.001 mol)

A radiographic image storage panel (33) was prepared by conducting the same operation as in the method of Example 1 except for using the stimulable phosphor starting material of the above (33) and calcining in an oxidative atmosphere of a gas mixture comprising 20 vol.% of oxygen gas and 80 vol.% of nitrogen gas.

Example 3

By carrying out the same operation as in Example 2 except for using the stimulable phosphor starting material of the above (22), a radiographic image storage panel (34) was prepared.

Comparative example 1

After the respective phosphor starting materials were weighed as shown below by (35) to (40), they were thoroughly mixed by use of a ball mill to compound 6 kinds of stimulable phosphor starting material mixtures.

| (35) | RbBr | 165.4 g | (1 mol) |
|------|------|---------|---------|
|      | TlBr | 0.284 g | (0.001 mol) |
| (36) | RbI  | 212.4 g | (1 mol) |
|      | TlI  | 0.331 g | (0.001 mol) |
| (37) | KI   | 166.0 g | (1 mol) |
|      | TlI  | 0.331 g | (0.001 mol) |
| (38) | CsBr | 212.8 g | (1 mol) |
|      | TlBr | 0.284 g | (0.001 mol) |
| (39) | CsI  | 259.8 g | (1 mol) |
|      | TlI  | 0.331 g | (0.001 mol) |
| (40) | RbBr | 140.6 g | (0.85 mol) |
|      | CsBr | 31.92 g | (0.15 mol) |
|      | TlBr | 0.284 g | (0.001 mol) |

Except for using the stimulable phosphor starting materials of the above (35) to (40), the same operation as in Example 1 was repeated to prepare radiation image converting panels. They are called panels (35) to (40) respectively corresponding to the above phosphor starting materials (35) to (40).

Next, each radiographic image storage panels of the above (1) to (40) was cut into a test strip with a width of 30 cm, which was placed at a distance of 100 cm from the focus of X-ray bulb, and X-ray of bulb voltage of 80 KVp and bulb current of 100 mA was irradiated for 0.1 sec., and then He-Ne laser beam (632.8 nm, 10 mW) was scanned once for a scanning time of $5 \times 10^{-3}$ sec. in its width direction and the afterglow characteristic of stimulated luminescence was evaluated.

For the panels (1), (33), (34), (35), afterglow of stimulated luminescence was attenuated in the manner as shown in Fig. 1. In Fig. 1, the axis of abscissa shows the time after completion of laser scanning and the axis of ordinate the value of [afterglow quantity of stimulated luminescence/stimulated luminescence quantity]. It can be seen that the panel (1) (solid line), the panel (33) (chain line), the panel (34) (chain double-dashed line) are smaller in afterglow as compared with the panel (35) (dotted line).

For the panels (1) to (40), the values of [afterglow quantity of stimulated luminescence/ stimulated luminescence quantity] at $1 \times 10^{-4}$ sec. after completion of laser scanning are shown in Table 1. It can be seen that the panels (1) to (34) are smaller in afterglow of stimulated luminescence as compared with the panels (35) to (40).

Table 1

| | | Composition of phosphor | Afterglow quantity of stimulated luminescence / Stimulated luminescence quantity |
|---|---|---|---|
| Panel | (1) | RbBr·0.03RbOH:0.001TlBr | 0.0046 |
| " | (2) | RbBr·0.05NaOH:0.001TlBr | 0.0094 |
| " | (3) | RbBr·0.03Na$_2$CO$_3$:0.001TlBr | 0.010 |
| " | (4) | RbBr·0.05KOH:0.001TlBr | 0.0053 |
| " | (5) | RbBr·0.02Rb$_2$O:0.001TlBr | 0.0060 |
| " | (6) | RbBr·0.02Rb$_2$CO$_3$:0.001TlBr | 0.0069 |
| " | (7) | RbBr·3x10$^{-7}$RbNO$_3$:0.001TlBr | 0.19 |
| " | (8) | RbBr·4x10$^{-7}$RbNO$_3$:0.001TlBr | 0.18 |
| " | (9) | RbBr·1x10$^{-6}$RbNO$_3$:0.001TlBr | 0.12 |
| " | (10) | RbBr·1x10$^{-5}$RbNO$_3$:0.001TlBr | 0.072 |
| " | (11) | RbBr·0.02RbNO$_3$:0.001TlBr | 0.013 |
| " | (12) | RbBr·0.04RbNO$_3$:0.001TlBr | 0.0043 |
| " | (13) | RbBr·0.06RbNO$_3$:0.001TlBr | 0.0017 |
| " | (14) | RbBr·0.007RbNO$_3$:0.001TlBr | 0.0014 |
| " | (15) | RbBr·0.15RbNO$_3$:0.001TlBr | 0.0007 |

Table 1 (Cont'd)

| | | Composition of phosphor | Aftergrow quantity of stimulated luminescence / Stimulated luminescence quantity |
|---|---|---|---|
| Panel | (16) | $RbBr \cdot 0.2RbNO_3:0.001TlBr$ | 0.0005 |
| " | (17) | $RbBr \cdot 0.3RbNO_3:0.001TlBr$ | 0.0005 |
| " | (18) | $RbBr \cdot 0.02Rb_2SO_4:0.001TlBr$ | 0.014 |
| " | (19) | $RbBr \cdot 0.02CsOH:0.001TlBr$ | 0.0083 |
| " | (20) | $RbBr \cdot 0.01Cs_2CO_3:0.001TlBr$ | 0.0078 |
| " | (21) | $RbBr:0.0004TlNO_3$ | 0.0027 |
| " | (22) | $RbBr \cdot 0.03RbOH:0.0004TlNO_3$ | 0.0021 |
| " | (23) | $RbBr:0.0005Tl_2O$ | 0.017 |
| " | (24) | $RbBr \cdot 0.02Rb_2CO_3:0.0005Tl_2O$ | 0.0056 |
| " | (25) | $RbBr \cdot 0.02SrCO_3:0.001TlBr$ | 0.0088 |
| " | (26) | $RbBr \cdot 0.02BaCO_3:0.001TlBr$ | 0.0096 |
| " | (27) | $RbI:0.0004TlNO_3$ | 0.0073 |
| " | (28) | $KI \cdot 0.03RbOH:0.001TlI$ | 0.017 |
| " | (29) | $CsBr \cdot 0.03CsOH:0.001TlBr$ | 0.023 |
| " | (30) | $CsI:0.0004TlNO_3$ | 0.0058 |

Table 1 (Cont'd)

| Composition of phosphor | Afterglow quantity of stimulated luminescence / Stimulated lumine- scence quantity |
|---|---|
| Panel (31)  0.85RbBr·0.15CsBr·0.02RbNO$_3$:0.001TlBr | 0.014 |
| "  (32)  0.85RbBr·0.15CsBr:0.0004TlBr | 0.0041 |
| "  (33)  RbBr:0.001TlBr | 0.078 |
| "  (34)  RbBr·0.03RbOH:0.0004TlNO$_3$ | 0.0016 |
| "  (35)  RbBr:0.001TlBr | 0.21 |
| "  (36)  RbI:0.001TlI | 0.23 |
| "  (37)  KI:0.001TlI | 0.41 |
| "  (38)  CsBr:0.001TlBr | 0.80 |
| "  (39)  CsI:0.001TlI | 0.34 |
| "  (40)  0.85RbBr·0.15CsBr:0.001TlBr | 0.24 |

Phosphors employed in panels (33) and (34) were calcined in oxidative atmosphere.

## Claims

1. A radiographic image storage panel having a stimulable phosphor-containing layer, wherein said stimulable phosphor is represented by the following general formula :

$$M^IX \cdot aM^{II}X'_2 \cdot bM^{III}X''_3 \cdot cA : dB$$

wherein $M^I$ is at least one alkali metal selected from Li, Na, K, Rb and Cs ; $M^{II}$ is at least one divalent metal selected from Be, Mg, Ca, Sr, Ba, Zn, Cd, Cu and Ni ; $M^{III}$ is at least one trivalent metal selected from Sc, Y, La, Ce, Pr, Nd, Pm, Sm, Eu, Gd, Tb, Dy, Ho, Er, Tm, Yb, Lu, Al, Ga and In ; X, X′ and X″ each represent at least one halogen selected from F, Cl, Br and I ; A is Rb$_2$O and/or at least one compound containing oxygen selected from the group consisting of hydroxides, carbonates, sulfates and nitrates ; B is at least one metal compound of the metal selected from Eu, Tb, Ce, Tm, Dy, Pr, Ho, Nd, Yb, Er, Gd, Lu, Sm, Y, Tl, Na, Ag, Cu, In and Mg or said metal ; $\underline{a}$ is a numerical value in the range of $0 \leq \underline{a} < 0.5$ ; $\underline{b}$ is a numerical value in the range of $0 \leq \underline{b} < 0.5$ ; $\underline{c}$ is a numerical value which is determined so that the content of at least one of the oxygen atoms and oxygen ions contained in A may be 0.5 mol or less per 1 mol of an alkali halide in the alkali halide phosphor ; and $\underline{d}$ is a numerical value in the range of $0 < \underline{d} \leq 0.2$.

2. The radiographic image storage panel according to claim 1, wherein $\underline{a}$ is a numerical value in the range of $0 \leq \underline{a} < 0.4$ ; $\underline{b}$ is a numerical value in the range of $0 \leq \underline{b} < 10^{-2}$ ; $\underline{c}$ is a numerical value which is determined so that the content of at least one of the oxygen atoms and oxygen ions contained in A may be in the range of from $10^{-6}$ to 0.2 per 1 mol of an akali halide in the alkali halide phosphor ; and $\underline{d}$ is a numerical value in the range of $10^{-6} \leq \underline{d} \leq 0.1$.

3. A method of converting a radiographic image, by
a) storing a radiographic image in a phosphor-containing layer of a radiographic image storing panel,
b) exciting the phosphor with energy to radiate the stored radiation energy as a luminescence and
c) detecting said luminescence to form an image, **characterized in that** the phosphor is represented by the general formula of claim 1 or 2.

4. A radiographic image storage panel having a stimulable phosphor-containing layer, wherein said stimulable phosphor is an alkali halide phosphor prepared by carrying out calcination in an oxidative atmosphere.

5. The radiographic image storage panel according to claim 4, containing oxygen as an oxygen compound.

6. The radiographic image storage panel according to claim 4, wherein the content of oxygen per one mol of an alkali halide contained in said alkali halide phosphor is 0.5 mol or less.

7. The radiographic image storage panel according to claim 4, wherein the content of oxygen per one mol of an alkali halide contained in the alkali halide phosphor is from $10^{-6}$ mol to 0.2 mol.

8. The radiographic image storage panel according to claim 4, wherein an alkali halide contained in the alkali halide contains at least one of Rb and Cs as the component.

9. The radiographic image storage panel according to claim 4, wherein said alkali halide phosphor contains at least one selected from the group consisting of the respective compounds of Tl, Na, Ag, Cu and In as the activator.

10. The radiographic image storage panel according to claim 4, wherein said alkali halide phosphor has been prepared by carrying out calcination by use of a compound containing oxygen as a part of the phosphor starting materials.

11. The radiographic image storage panel according to claim 10, wherein said compound containing oxygen is at least one selected from the group consisting of hydroxides, carbonates, sulfates, nitrates and oxides.

12. The radiographic image storage panel according to claim 10, wherein said compound containing oxygen is at least one selected from the group consisting of $KOH$, $Na_2CO_3$, $Rb_2SO_4$, $CsNO_3$, $Rb_2O$ and $RbNO_3$.

13. The radiographic image storage panel according to claim 4, wherein said alkali halide phosphor is represented by the Formula :

$$M^IX \cdot aM^{II}X'_2 \cdot bM^{III}X''_3 \cdot cA : dB$$

wherein $M^I$ is at least one alkali metal selected from Li, Na, K, Rb and Cs ; $M^{II}$ is at least one divalent metal selected from Be, Mg, Ca, Sr, Ba, Zn, Cd, Cu and Ni ; $M^{III}$ is at least one trivalent metal selected from Sc, Y, La, Ce, Pr, Nd, Pm, Sm, Eu, Gd, Tb, Dy, Ho, Er, Tm, Yb, Lu, Al, Ga and In ; X, X' and X'' each represent at least one halogen selected from F, Cl, Br and I ; A is a compound having a composition containing oxygen ; B is at least one metal compound of the metal selected from Eu, Tb, Ce, Tm, Dy, Pr, Ho, Nd, Yb, Er, Gd, Lu, Sm, Y, Tl, Na, Ag, Cu, In and Mg or said metal ; $\underline{a}$ is a numerical value in the range of $0 \leq \underline{a} < 0.5$ ; $\underline{b}$ is a numerical value in the range of $0 \leq \underline{b} < 0.5$ ; $\underline{c}$ is a numerical value which is determined so that the content of at least one of the oxygen atoms and oxygen ions contained in A may be 0.5 mol or less per 1 mol of an alkali halide in the alkali halide phosphor ; and $\underline{d}$ is a numerical value in the range of $0 < \underline{d} \leq 0.2$.

14. The radiographic image storage panel according to claim 13, wherein $\underline{a}$ is a numerical value in the range of $0 \leq \underline{a} < 0.4$ ; $\underline{b}$ is a numerical value in the range of $0 \leq \underline{b} < 10^{-2}$ ; $\underline{c}$ is a numerical value which is determined so that the content of at least one of the oxygen atoms and oxygen ions contained in A may be in the range of from $10^{-6}$ to 0.2 per 1 mol of an alkali halide in the alkali halide phosphor ; and $\underline{d}$ is a numerical value in the range of $10^{-6} \leq \underline{d} \leq 0.1$.

15. A method of converting a radiographic image, by
a) a storing a radiographic image in a phosphor-containing layer of a radiographic image storing panel,

b) exciting the phosphor with energy to radiate the stored radiation energy as a luminescence and

c) detecting said lunimescence to form an image, characterized in that the phosphor is an alkali halide phosphor prepared by carrying out calcination in an oxidative atmosphere as claimed in any of claims 10 to 14.

## Ansprüche

1. Radiographische Bildspeicher-Platte mit einer stimulierbaren Leuchtstoff enthaltenden Schicht, worin der stimulierbare Leuchtstoff dargestellt wird durch die folgende allgemeine Formel :

$$M^I X \cdot aM^{II} X'_2 \cdot bM^{III} X''_3 \cdot cA : dB$$

worin $M^I$ mindestens ein Alkalimetall ist ausgewählt aus Li, Na, K, Rb und Cs ; $M^{II}$ mindestens ein zweiwertiges Metall ist, ausgewählt aus Be, Mg, Ca, Sr, Ba, Zn, Cd, Cu und Ni ; $M^{III}$ mindestens ein dreiwertiges Metall ist, ausgewählt aus Sc, Y, La, Ce, Pr, Nd, Pm, Sm, Eu, Gd, Tb, Dy, Ho, Er, Tm, Yb, Lu, Al, Ga und In ; X, X' und X'' jeweils mindestens ein Halogen darstellen, ausgewählt aus F, Cl, Br und I ; A $Rb_2O$ und/oder mindestens eine Verbindung ist, die Sauerstoff enthält, ausgewählt aus der Gruppe von Hydroxiden, Carbonaten, Sulfaten und Nitraten ; B mindestens eine Metallverbindung des Metalls ausgewählt aus Eu, Tb, Ce, Tm, Dy, Pr, Ho, Nd, Yb, Er, Gd, Lu, Sm, Y, Tl, Na, Ag, Cu, In und Mg, oder das Metall, ist ; a ein Zahlenwert im Bereich von $0 \leq a < 0.5$ ; b ein Zahlenwert im Bereich von $0 \leq b < 0.5$ ; c ein Zahlenwert ist, der so bestimmt ist, daß der Gehalt von mindestens einem der Sauerstoffatome und Sauerstoffionen, die in A enthalten sind, 0,5 Mol oder weniger pro 1 Mol eines Alkalihalogenids in dem Alkalihalogenid-Leuchtstoff sein kann ; und d ein Zahlenwert im Bereich von $0 < d \leq 0.2$ ist.

2. Radiographische Bildspeicher-Platte nach Anspruch 1, worin a ein Zahlenwert im Bereich von $0 \leq a < 0.4$ ist ; d ein Zahlenwert im Bereich von $0 \leq b < 10^{-2}$ ist ; c ein Zahlenwert ist, der so bestimmt ist, daß der Gehalt von mindestens einem der Sauerstoffatome und Sauerstoffionen, die in A enthalten sind, im Bereich von $10^{-6}$ bis 0.2 pro 1 Mol eines Alkalihalogenids in dem Alkalihalogenid-Leuchtstoff sein kann ; und d ein Zahlenwert im Bereich von $10^{-6} \leq d \leq 0.1$ ist.

3. Verfahren zur Umwandlung eines radiographischen Bildes durch

a) Speichern eines radiographischen Bildes in einer Leuchtstoff enthaltenden Schicht einer radiographischen Bildspeicher-Platte,

b) Anregen des Leuchtstoffs mit Energie zur Ausstrahlung der gespeicherten Strahlungsenergie als Lumineszenz und

c) Feststellen der Lumineszenz unter Bildung eines Bildes, **dadurch gekennzeichnet**, daß der Leuchtstoff dargestellt wird durch die allgemeine Formel von Anspruch 1 oder 2.

4. Radiographische Bildspeicher-Platte mit einer stimulierbaren Leuchtstoff enthaltenden Schicht, worin der stimulierbare Leuchtstoff ein Alkalihalogenid-Leuchtstoff, hergestellt durch Kalzinieren in einer oxidativen Atmosphäre, ist.

5. Radiographische Bildspeicher-Platte nach Anspruch 4, enthaltend Sauerstoff als eine Sauerstoff-Verbindung.

6. Radiographische Bildspeicher-Platte nach Anspruch 4, worin der Sauerstoffgehalt pro 1 Mol eines in dem Alkalihalogenid-Leuchtstoff enthaltenen Alkalihalogenids 0.5 Mol oder weniger ist.

7. Radiographische Bildspeicher-Platte nach Anspruch 4, worin der Sauerstoffgehalt pro 1 Mol in dem Alkalihalogenid-Leuchtstoff enthaltendem Alkalihalogenid $10^{-6}$ Mol bis 0.2 Mol beträgt.

8. Radiographische Bildspeicher-Platte nach Anspruch 4, worin ein Akalihalogenid, das in dem Alkalihalogenid enthalten ist, mindestens eines von Rb und Cs als Bestandteil enthält.

9. Radiographische Bildspeicher-Platte nach Anspruch 4, worin der Alkalihalogenid-Leuchtstoff mindestens eine, ausgewählt aus der Gruppe der jeweiligen Verbindungen von Tl, Na, Ag, Cu und In als Aktivator, enthält.

10. Radiographische Bildspeicher-Platte nach Anspruch 4, worin der Alkalihalogenid-Leuchtstoff hergestellt wurde durch Kalzinieren unter Verwendung einer Sauerstoff enthaltenden Verbindung als einem Teil der Leuchtstoff-Ausgangsmaterialien.

11. Radiographische Bildspeicher-Platte nach Anspruch 10, worin die Sauerstoff enthaltende Verbindung mindestens eine ist, ausgewählt aus der Gruppe von Hydroxiden, Carbonaten, Sulfaten, Nitraten und Oxiden.

12. Radiographische Bildspeicher-Platte nach Anspruch 10, worin die Sauerstoff enthaltende Verbindung mindestens eine ist, ausgewählt aus der Gruppe von KOH, $Na_2CO_3$, $Rb_2SO_4$, $CsNO_3$, $Rb_2O$ und $RbNO_3$.

13. Radiographische Bildspeicher-Platte nach Anspruch 4, worin der Alkalihalogenid-Leuchtstoff dargestellt wird durch die Formel

$$M^I X \cdot aM^{II}X'_2 \cdot bM^{III}X''_3 \cdot cA : dB$$

worin $M^I$ mindestens ein Alkalimetall ist, ausgewählt aus Li, Na, K, Rb und Cs ; $M^{II}$ mindestens ein zweiwertiges Metall ist, ausgewählt aus Be, Mg, Ca, Sr, Ba, Zn, Cd, Cu und Ni ; $M^{III}$ mindestens ein dreiwertiges Metall ist, ausgewählt aus Sc, Y, La, Ce, Pr, Nd, Pm, Sm, Eu, Gd, Tb, Dy, Ho, Er, Tm, Yb, Lu, Al, Ga und In ; X, X' und X'' jeweils mindestens ein Halogen, ausgewählt aus F, Cl, Br und I, darstellen ; A eine Verbindung ist mit einer Zusammensetzung, die Sauerstoff enthält ; B mindestens eine Metallverbindung des Metalls ausgewählt aus Eu, Tb, Ce, Tm, Dy, Pr, Ho, Nd, Yb, Er, Gd, Lu, Sm, Y, Tl, Na, Ag, Cu, In und Mg oder das Metall ist ; $\underline{a}$ ein Zahlenwert im Bereich von $0 \leq \underline{a} < 0.5$ ist ; $\underline{b}$ ein Zahlenwert im Bereich von $0 \leq \underline{b} < 0,5$ ist ; $\underline{c}$ ein Zahlenwert ist, der so bestimmt ist, daß der Gehalt von mindestens einem der Sauerstoffatome und Sauerstoffionen, die in A enthalten sind, 0.5 Mol oder weniger pro 1 Mol eines Alkalihalogenids in dem Alkalihalogenid-Leuchtstoff sein kann ; und $\underline{d}$ ein Zahlenwert im Bereich von $0 < \underline{d} \leq 0.2$ ist.

14. Radiographische Bildspeicher-Platte nach Anspruch 13, worin $\underline{a}$ ein Zahlenwert im Bereich von $0 \leq \underline{a} < 0.4$ ist ; $\underline{b}$ ein Zahlenwert im Bereich von $0 \leq \underline{b} < 10^{-2}$ ist ; $\underline{c}$ ein Zahlenwert ist, der so bestimmt ist, daß der Gehalt von mindestens einem der Sauerstoffatome und Sauerstoffionen, die in A enthalten sind, im Bereich von $10^{-6}$ bis 0.2 pro 1 Mol eines Alkalihalogenids in dem Alkalihalogenid-Leuchtstoff, sein kann ; und $\underline{d}$ ein Zahlenwert im Bereich von $10^{-6} \leq \underline{d} \leq 0.1$ ist.

15. Verfahren zur Umwandlung eines radiographischen Bildes durch

a) Speichern eines radiographischen Bildes in einer Leuchtstoff enthaltenden Schicht einer radiographischen Bildspeicher-Platte,

b) Anregen des Leuchtstoffs mit Energie zur Ausstrahlung der gespeicherten Strahlungsenergie als Lumineszenz und

c) Feststellen der Lumineszenz unter Bildung eines Bildes, dadurch gekennzeichnet, daß der Leuchtstoff ein Alkalihalogenid-Leuchtstoff ist, hergestellt durch Kalzinieren in einer oxidativen Atmosphäre, wie in einem der Ansprüche 10 bis 14 beansprucht.

## Revendications

1. Panneau d'emmagasinage d'images radiographiques comportant une couche contenant un luminophore stimulable, dans lequel le luminophore stimulable répond à la formule générale :

$$M^I X \cdot aM^{II}X'_2 \cdot bM^{III}X''_3 \cdot cA : dB$$

dans laquelle $M^I$ est au moins un métal alcalin choisi parmi Li, Na, K, Rb et Cs ; $M^{II}$ est au moins un métal divalent choisi parmi Be, Mg, Ca, Sr, Ba, Zn, Cd, Cu et Ni ; $M^{III}$ est au moins un métal trivalent choisi parmi Sc, Y, La, Ce, Pr, Nd, Pm, Sm, Eu, Gd, Tb, Dy, Ho, Er, Tm, Yb, Lu, Al, Ga et In ; X, X' et X'' représentent chacun au moins un atome d'halogène choisi parmi F, Cl, Br et I ; A représente $Rb_2O$ et/ou au moins un composé contenant de l'oxygène choisi parmi les hydroxydes, les carbonates, les sulfates et les nitrates, B est au moins un composé métallique d'un métal choisi parmi Eu, Tb, Ce, Tm, Dy, Pr, Ho, Nd, Yb, Er, Gd, Lu, Sm, Y, Tl, Na, Ag, Cu, In et Mg ou ledit métal ; $\underline{a}$ est un nombre d'une valeur comprise entre 0 et 0,5 ; $\underline{b}$ est un nombre d'une valeur compris entre 0 et 0,5 ; $\underline{c}$ est un nombre déterminé de façon que la teneur en au moins l'un des atomes d'oxygène et d'ions oxygène dans A soit de 0,5 mole ou moins par 1 mole de l'halogénure alcalin dans le luminophore d'halogénure d'alcalin ; et $\underline{d}$ est un nombre d'une valeur comprise entre 0 et 0,2.

2. Panneau d'emmagasinage d'images radiographiques selon la revendication 1, dans lequel $\underline{a}$ est d'une valeur comprise entre 0 et 0,4 ; $\underline{b}$ est d'une valeur comprise entre 0 et $10^{-2}$ ; $\underline{c}$ est d'une valeur déterminée de manière que la teneur en au moins l'un des atomes d'oxygène et ions oxygène dans A soit comprise entre $10^{-6}$ et 0,2 par mole d'halogénure alcalin dans le luminophore d'halogénure d'alcalin ; et $\underline{d}$ est d'une valeur comprise entre $10^{-6}$ et 0,1.

3. Procédé de conversion d'une image radiographique, par

a) emmagasinage d'une image radiographique dans une couche contenant un luminophore d'un panneau d'emmagasinage d'images radiographiques,

b) excitation du luminophore avec l'énergie pour faire rayonner l'énergie de radiation emmagasinée sous forme d'une luminescence, et

c) détection de ladite luminescence pour former une image,

caractérisé en ce que le luminophore répond à la formule générale de la revendication 1 ou 2.

4. Panneau d'emmagasinage d'images radiographiques comportant une couche comportant un luminophore stimulable, dans lequel ledit luminophore stimulable est un luminophore d'halogénure de métal alcalin qu'on prépare en effectuant une calcination en atmosphère oxydante.

5. Panneau d'emmagasinage d'images radiographiques selon la revendication 4, contenant de l'oxygène en qualité de composé d'oxygène.

6. Panneau d'emmagasinage d'images radiographiques selon la revendication 4, dans lequel la teneur en oxygène par mole d'halogénure alcalin dans ledit luminophore d'halogénure alcalin est de 0,5 mole ou moins.

7. Panneau d'emmagasinage d'images radiographiques selon la revendication 4, dans lequel la teneur en oxygène par mole d'halogénure alcalin dans le luminophore d'halogénure alcalin est comprise entre $10^{-6}$ et 0,2 mole.

8. Panneau d'emmagasinage d'images radiographiques selon la revendication 4, dans lequel l'halogénure alcalin dans le luminophore d'halogénure alcalin contient au moins Rb et/ou Cs comme composant.

9. Panneau d'emmagasinage d'images radiographiques selon la revendication 4, dans lequel ledit luminophore d'halogénure alcalin contient au moins l'un des composés suivants : Tl, Na, Ag, Cu et In, à titre d'activant.

10. Panneau d'emmagasinage d'images radiographiques selon la revendication 4, dans lequel, pour préparer le luminophore d'halogénure alcalin, on effectue une calcination en utilisant un composé contenant de l'oxygène à titre d'un composant du luminophore de départ.

11. Panneau d'emmagasinage d'images radiographiques selon la revendication 10, dans lequel ledit composé contenant de l'oxygène est au moins un composé choisi parmi les hydroxydes, les carbonates, les sulfates, les nitrates et les oxydes.

12. Panneau d'emmagasinage d'images radiographiques selon la revendication 10, dans lequel ledit composé contenant de l'oxygène est au moins un composé choisi parmi KOH, $Na_2CO_3$, $Rb_2SO_4$, $CsNO_3$, $Rb_2O$ et $RbNO_3$.

13. Panneau d'emmagasinage d'images radiographiques selon la revendication 4, dans lequel ledit luminophore d'halogénure alcalin répond à la formule :

$$M^IX \cdot aM^{II}X'_2 \cdot bM^{III}X''_3 \cdot cA : dB$$

dans laquelle $M^I$ est au moins un métal alcalin choisi parmi Li, Na, K, Rb et Cs ; $M^{II}$ est au moins un métal divalent choisi parmi Be, Mg, Ca, Sr, Ba, Zn, Cd, Cu et Ni ; $M^{III}$ est au moins un métal trivalent choisi parmi Sc, Y, La, Ce, Pr, Nd, Pm, Sm, Eu, Gd, Tb, Dy, Ho, Er, Tm, Yb, Lu, Al, Ga et In ; X, X' et X" représentent chacun au moins un atome d'halogène choisi parmi F, Cl, Br et I ; A représente $Rb_2O$ et/ou au moins un composé contenant de l'oxygène choisi parmi les hydroxydes, les carbonates, les sulfates et les nitrates, B est au moins un composé métallique d'un métal choisi parmi Eu, Tb, Ce, Tm, Dy, Pr, Ho, Nd, Yb, Er, Gd, Lu, Sm, Y, Tl, Na, Ag, Cu, In et Mg ou ledit métal ; $\underline{a}$ est un nombre d'une valeur comprise entre 0 et 0,5 ; $\underline{b}$ est un nombre d'une valeur comprise entre 0 et 0,5 ; $\underline{c}$ est un nombre déterminé de façon que la teneur en au moins l'un des atomes d'oxygène et d'ions oxygène dans A soit de 0,5 mole ou moins par 1 mole de l'halogénure alcalin dans le luminophore d'halogénure d'alcalin ; et $\underline{d}$ est un nombre d'une valeur comprise entre 0 et 0,2.

14. Panneau d'emmagasinage d'images radiographiques selon la revendication 13, dans lequel $\underline{a}$ est d'une valeur comprise entre 0 et 0,4 ; $\underline{b}$ est d'une valeur comprise entre 0 et $10^{-2}$ ; $\underline{c}$ est d'une valeur déterminée de manière que la teneur en au moins l'un des atomes d'oxygène et ions oxygène dans A soit comprise entre $10^{-6}$ et 0,2 par mole d'halogénure alcalin dans le luminophore d'halogénure d'alcalin ; et $\underline{d}$ est d'une valeur comprise entre $10^{-6}$ et 0,1.

15. Procédé de conversion d'une image radiographique, par

a) emmagasinage d'une image radiographique dans une couche contenant un luminophore d'un panneau d'emmagasinage d'images radiographiques,

b) excitation du luminophore avec l'énergie pour faire rayonner l'énergie de radiation emmagasinée sous forme d'une luminescence, et

c) détection de ladite luminescence pour former une image,

caractérisé en ce que le luminophore est un luminophore d'halogénure alcalin qu'on prépare en effectuant la calcination en atmosphère oxydante selon l'une quelconque des revendications 10 à 14.

# FIG. 1